Europäisches Patentamt

European Patent Office

Office européen des brevets

(11) Veröffentlichungsnummer : **0 146 043**
**B1**

# EUROPÄISCHE PATENTSCHRIFT

(45) Veröffentlichungstag der Patentschrift :
25.05.88

(21) Anmeldenummer : 84114472.8

(22) Anmeldetag : 29.11.84

(51) Int. Cl.⁴ : **H 04 L 25/12**

(54) Schaltungsanordnung zur sendeseitigen Tastung einer Einfachstromleitung.

(30) Priorität : 02.12.83 DE 3343711

(43) Veröffentlichungstag der Anmeldung :
26.06.85 Patentblatt 85/26

(45) Bekanntmachung des Hinweises auf die Patenterteilung : 25.05.88 Patentblatt 88/21

(84) Benannte Vertragsstaaten :
**BE DE NL**

(56) Entgegenhaltungen :
**EP-A- 0 084 370**
**DE-C-   484 260**

(73) Patentinhaber : **Siemens Aktiengesellschaft Berlin
und München
Wittelsbacherplatz 2
D-8000 München 2 (DE)**

(72) Erfinder : **Schumacher, Christoph
Mozartstrasse 13
D-8034 Germering (DE)**

**Beschreibung**

Die Erfindung betrifft eine Schaltungsanordnung zur sendeseitigen Tastung einer Einfachstromleitung gemäß dem Oberbegriff des Patentanspruches 1.

Bei der Übertragung von Fernschreibzeichen oder Daten über eine Leitung nach dem sog. Einfachstrom-Übertragungsprinzip spielt der Einfluß der Leitungskapazität eine besondere Rolle. Der Grund dafür liegt darin, daß bei der Tastung der Leitung, d. h. bei Unterbrechung des Leitungsstromes und beim Schließen des Leitungskreises die Leitungskapazität in Verbindung mit dem Leitungswiderstand und dem Leitungsergänzungswiderstand mit unterschiedlichen Zeitkonstanten aufgeladen und entladen wird. Damit ergeben sich mehr oder weniger ausgeprägte Verzerrungen der übertragenen Zeichenschritte.

In herkömmlichen Anschlußschaltungen der Fernschreibtechnik sind diese Einflüsse durch die induktiven Bestandteile des Fernschreibers selbst bzw. durch zusätzliche Induktivitäten reduziert worden. Es ist damit erreicht worden, daß jedenfalls im Bereich der Abtastung der Zeichenschritte, gleiche Anstiegs- und Abfallzeiten gewährleistet sind. Mit der Einführung neuerer elektronischer Fernschreiber entfällt der induktive Bestandteil der Teilnehmerendstelle. Um trotzdem keine unzulässig große Verzerrung zu erhalten, sind zusätzliche Induktivitäten vorgesehen worden. Diese sind zum Teil zusammen mit zusätzlichen Kapazitäten vorzugsweise in einem Tiefpaßfilter angeordnet, das den normalerweise herrschenden Bedingungen angepaßt sein muß. Im wesentlichen besteht die Wirkung der Induktivität für die Übertragung von Einfachstromzeichen über eine Zweidrahtleitung darin, daß bei einer Unterbrechung der Leitung infolge der kapazitiven Wirkung der Leitung der Leitungsstrom kurzzeitig noch weiterfließt und in einem aus der Induktivität, der Leitung und der Leitungskapazität gebildeten Schwingkreis eine sog. Überschwingung erzeugt. Diese Überschwingung wirkt auf die abfallende Flanke eines übertragenen Stromschrittes ein. Andererseits wird beim Schließen des Sendekontaktes, also beim Einschalten des Leitungsstromes, der Stromanstieg unter der Einwirkung der Induktivität verlangsamt. Diese Wirkung beeinflußt die Anstiegsflanke eines Stromschrittes. Beide Einflüsse führen zu einer Angleichung der Anstiegs- und der Abfallflanken und damit zu einer Symmetrierung der Anstiegs- und Abfallzeiten eines Stromschrittes.

Derartige Schaltungen sind jedoch wegen der voluminösen Induktivitäten, die dazu erforderlich sind, sehr aufwendig. Außerdem ist die Anpassung solcher Filteranordnungen an verschiedene Leitungslängen problematisch.

Es ist nun bereits eine Schaltungsanordnung zur Einfachstromtastung angegeben worden (DE-OS 3 201 592), die den Einsatz solcher Filter überflüssig macht. Diese bekannte Schaltung sieht im Endgerät, das über eine Einfachstromleitung mit der Gegenstelle verbunden ist, eine Stromkonstantschaltung vor, deren elektronisches Schaltelement als Sendekontakt zur Tastung des Leitungsstromes wirkt. Die Stromkonstantschaltung kann, wie ebenfalls in der zitierten Offenlegungsschrift angegeben ist, durch ein Filter realisiert sein, dessen Filtercharakteristik dem von der Stromkonstantschaltung geregelten Strom, also dem Leitungsstrom aufgeprägt ist. Der Vorteil der bekannten Schaltungsanordnung besteht im wesentlichen darin, daß ohne den Einsatz von Induktivitäten die abfallende und die ansteigende Flanke eines Stromschrittes jeweils durch etwa gleiche Zeitkonstante bestimmt ist, also daß für die Abfall- und für die Anstiegsflanke etwa gleiche Zeitbedingungen gewährleistet sind.

Mit der bekannten Schaltungsanordnung ist jedoch das Problem verbunden daß, falls z. B. in Folge von Toleranzen der Strom in Richtung auf einen höheren Wert eingestellt ist, als die Stromkonstantschaltung im Endgerät, dieser die Regelung praktisch allein übernimmt. Das bedeutet, daß besonders bei kurzen Leitungen im Endgerät eine hohe Verlustleistung auftritt, die mit besonderen Maßnahmen abgeführt werden muß. Deshalb müßte der Strom auf einem, gegenüber dem Nennwert deutlich höheren Wert eingestellt werden. Damit aber wird die Wirkung der Regelschaltung verringert. Ein weiteres Problem der bekannten Schaltungsanordnung entsteht bei deren Einsatz an sehr langen Leitungen. Durch den hierbei gegebenen, sehr langsamen Stromanstieg, wird beim kürzesten Schritt der zu übertragenden Zeichen der Endwert des Stromes nicht mehr erreicht. Dadurch verschiebt sich die abfallende Flanke des nächsten Schrittes. Es kommt zu den sogenannten Einschwingverzerrungen. Bei der eingangs erwähnten herkömmlichen Methode der Tastung mit Induktivität wurde dieser Effekt durch die Überschwingungen verringert.

Aufgabe der Erfindung ist es, unter Beibehaltung der durch die Stromkonstantschaltung erreichbaren Symmetrie einerseits sicherzustellen, daß auch bei Toleranzen im Endgerät keine hohe Verlustleistung auftritt und andererseits die Wirkung der Überschwingung nachzubilden und damit die Verzerrungen zu reduzieren.

Diese Aufgabe wird gemäß den kennzeichnenden Merkmalen des Patentanspruches 1 gelöst.

In Unteransprüchen sind Ausgestaltungen der erfindungsgemäßen Lösung angegeben.

Zur Erläuterung der Erfindung wird im folgenden auf ein in den Zeichnungen dargestelltes Ausführungsbeispiel verwiesen. Dort zeigen

Fig. 1 die Schaltung für ein Ausführungsbeispiel und

Fig. 2 den Verlauf des Leitungsstromes in der Endstelle und in der Gegenstelle.

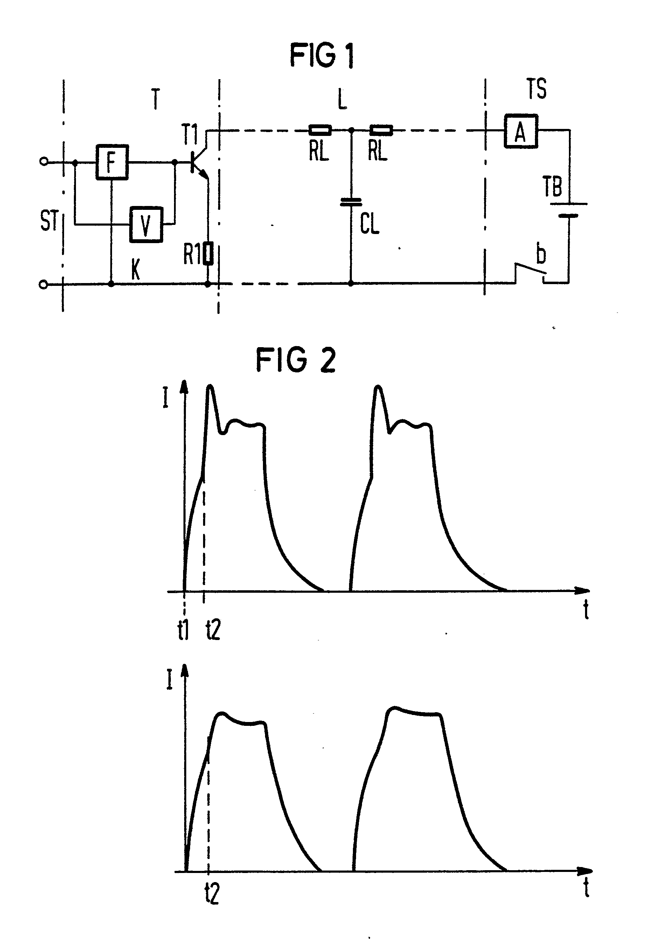

Das in Fig. 1 dargestellte Ausführungsbeispiel zeigt eine Endstelle T, beispielsweise eine Teilnehmerstelle, die über eine Leitung L mit einer Gegenstelle TS, beispielsweise einer Teilnehmerschaltung in einem Vermittlungsamt verbunden ist. Die Übertragung von Fernschreibzeichen erfolgt nach dem Einfachstrom-Hochpegelprinzip. In der Teilnehmerstelle T ist eine Stromkonstantschaltung K vorgesehen, die in an sich bekannter Weise aus einem Filter F, einem Transistor T1, einem Widerstand R1 und einem Zeitglied V aufgebaut ist. Die Stromkonstantschaltung K wird in hier nicht näher dargestellter Weise durch Steuersignale ST gesteuert. Der Transistor T1 der Stromkonstantschaltung K stellt den Sendekontakt der Teilnehmerstelle T dar, d. h. über den Transistor T1 wird die Leitung L getastet. Die Leitung L ist durch die Widerstände RL und durch die Kapazität CL symbolisiert. Von den Einrichtungen der Teilnehmerschaltung TS ist hier lediglich eine Abtasteinrichtung A, die sog. Telegrafenbatterie TB, sowie ein Sendekontakt b dargestellt. Die Abtasteinrichtung A, die in der Regel fest auf eine Abtastschwelle eingestellt ist, tastet die über die Leitung L eintreffenden Schritte ab, d. h. sie bewertet den Leitungsstrom IL. Über den Sendekontakt b werden in umgekehrter Richtung Zeichen zur Teilnehmerstelle T gesandt. Im betrachteten Fall ist der Sendekontakt b geschlossen.

Für die Erfindung ist es wesentlich, daß die Stromkonstantschaltung K den Leitungsstrom auf einen Wert regelt, der deutlich unter dem Wert des Linienstromes liegt. Normalerweise beträgt der Linienstrom IL 40 mA. In diesem Falle regelt die Stromkonstantschaltung z. B. auf 35 mA. Ein zweites wesentliches Kriterium der neuen Schaltung besteht darin, daß die Zeitschaltung V die Wirkung der Stromkonstantschaltung K noch vor Erreichen des durch sie bestimmten Stromregelwertes abschaltet. Das geschieht dadurch, daß die in der Stromkonstantschaltung K vorgesehene Filteranordnung F überbrückt wird.

Die Funktion der in Fig. 1 dargestellten Schaltungsanordnung wird im folgenden unter Bezugnahme auf Fig. 2 näher erläutert. Dort ist in Zeile 1 der Stromverlauf bei der Teilnehmerstelle T und in Zeile 2 der Strom in der Gegenstelle TS dargestellt. Wird zum Zeitpunkt t1 der Transistor T1 in der Teilnehmerstelle T leitend, was dem Schließen eines Sendekontaktes entspricht, so wird die Leitungskapazität CL mit dem durch die Stromkonstantschaltung geregelten Wert entladen, d. h. der Strom in der Teilnehmerstelle (Zeile 1) und der Strom in der Gegenstelle (Zeile 2) steigt langsam an. Noch vor Erreichen des in der Stromkonstantschaltung K eingestellten Wertes, der deutlich kleiner ist als der Linienstrom, wird die Regelfunktion der Stromkonstantschaltung abgeschaltet. Das geschieht, wie oben beschrieben, unter Steuerung der Zeitschaltung V in der Weise, daß die Filteranordnung der Stromkonstantschaltung K zum Zeitpunkt t2 überbrückt wird. Da zu diesem Zeitpunkt die Leitungskapazität noch nicht vollständig umgeladen ist, tritt im Stromverlauf an der Teilnehmerstelle eine deutlich Spitze auf. Diese Spitze wirkt analog dem Überschwingen bei Verwendung einer Induktivität. Das führt dazu, daß der Strom in der Gegenstelle trotz der Stromkonstantschaltung und der langen Leitung sicher den vorgesehenen Endwert des Linienstromes z. B. 40 mA erreicht, d. h. daß keine Einschwingvorgänge auftreten.

Es ist ein wesentlicher Vorteil dieser Schaltung, daß ähnlich wie bei der Tastung mit einer Induktivität, auch dann noch brauchbare Verzerrungswerte erhalten werden, wenn die Leitungskapazität so hoch ist, daß der eingeschwungene Zustand während eines Schrittes nicht mehr ganz erreicht wird. Für einen durch Unterbrechen der Leitung, d. h. durch Steuerung des Transistors T1 in seinem gesperrten Zustand übertragenen Startschrittes, bestehen an sich keine Besonderheiten. In diesem Falle wird die Leitungskapazität CL aufgeladen, wodurch der Stromabfall langsam abnimmt.

Die Abtastung des in der Gegenstelle ankommenden Stromverlaufes mittels einer Abtastschwelle AS führt zu symmetrischen, nahezu unverzerrten Zeichen.

## Patentansprüche

1. Schaltungsanordnung zur sendeseitigen Tastung einer zwischen einer Teilnehmerstelle und einer Gegenstelle, z. B. einer in einem Vermittlungsamt angeordneten Teilnehmerschaltung verlaufenden Einfachstromleitung, bei der in der Teilnehmerstelle eine Stromkonstantschaltung vorgesehen ist, deren Wirkung zeitlich begrenzt steuerbar ist, und über deren elektronisches Schaltelement der Leitungsstrom tastbar ist, dadurch gekennzeichnet, daß die Stromkonstantschaltung (K) auf einen Wert eingestellt ist, der unterhalb des als Nennleitungsstrom (IL = 40 mA) vorgesehenen Wertes liegt, und daß die Stromkonstantschaltung (K) vor Erreichen des eingestellten Wertes abschaltbar ist.

2. Schaltungsanordnung nach Anspruch 1, dadurch gekennzeichnet, daß zur Abschaltung der Stromkonstantschaltung (K) eine an sich bekannte Zeitschaltung (V) vorgesehen ist, durch die nach Ablauf einer vorbestimmten Verzögerungszeit (τ) die Filteranordnung (F) der Stromkonstantschaltung (K) überbrückbar ist.

3. Schaltungsanordnung nach Anspruch 1 und 2, dadurch gekennzeichnet, daß die Stromkonstantschaltung (K) auf einen Wert eingestellt ist, der nennenswert unterhalb des Wertes für den Linienstrom (IL = 40 mA) liegt.

4. Schaltungsanordnung nach Anspruch 1 bis 3, dadurch gekennzeichnet, daß die Stromkonstantschaltung (K) auf einen Wert eingestellt ist, der auch unter Berücksichtigung aller Toleranzen unter dem an der Gegenstelle (TS) eingestellten Strom liegt.

## Claims

1. A circuit arrangement for keying, at the transmitter end, a neutral current line extending between a subscriber station and a remote station, for example a subscriber line circuit arranged in an exchange, in which there is provided in the subscriber station a current stabilizer circuit, whose effect can be controlled in a time restricted manner, and by means of the electronic switch element of which the line current can be keyed, characterised in that the current stabilizer circuit (K) is set to a value lying below the value intended as rated line current (IL = 40 mA), and that the current stabilizer circuit (K) can be disconnected before the set value is reached.

2. A circuit arrangement as claimed in Claim 1, characterised in that for disconnecting the current stabilizer circuit (K) there is provided a time-delay switch (V), known per se, via which the filter arrangement (F) of the current stabilizer circuit (K) can be bridged after the expiry of a predetermined delay time ($\tau$).

3. A circuit arrangement as claimed in Claims 1 and 2, characterised in that the current stabilizer circuit (K) is set to a value lying considerably below the value for the line current (IL = 40 mA).

4. A circuit arrangement as claimed in Claims 1 to 3, characterised in that the current stabilizer circuit (K) is set to a value lying below that current set at the remote station (TS), taking into account all the tolerances.

## Revendications

1. Dispositif pour la manipulation côté émission d'une ligne à courant simple, s'étendant entre un poste d'abonné et un équipement correspondant, par exemple un circuit d'abonné disposé dans un centre de commutation, dispositif avec lequel un circuit à courant constant est prévu dans le poste d'abonné, circuit dont l'action peut être commandée de façon limitée dans le temps et à travers l'élément de commutation électronique duquel le courant de la ligne est manipulable, caractérisé en ce que le circuit à courant constant (K) est réglé à une valeur qui est inférieure à la valeur prévue comme courant de ligne nominal (IL = 40 mA) et que le circuit de courant constant (K) peut être rendu inopérant avant que la. valeur réglée ne soit atteinte.

2. Dispositif selon la revendication 1, caractérisé en ce que, pour rendre le circuit à courant constant (K) inopérant, il est prévu un circuit de retard (V), en lui-même connu, par lequel le dispositif de filtrage (F) du circuit à courant constant (K) peut être shunté après expiration d'un temps de retard ($\tau$) préfixé.

3. Dispositif selon les revendications 1 et 2, caractérisé en ce que le circuit à courant constant (K) est réglé à une valeur notablement inférieure à la valeur pour le courant de la voie (IL = 40 mA).

4. Dispositif selon les revendications 1 à 3, caractérisé en ce que le circuit à courant constant (K) est réglé à une valeur qui est inférieure au courant réglé sur l'équipement correspondant (TS), même en tenant compte de toutes les tolérances.

# FIG 1

# FIG 2